# EUROPÄISCHE PATENTSCHRIFT

(11) **EP 2 391 247 B1**
(45) Veröffentlichungstag und Bekanntmachung des Hinweises auf die Patenterteilung: **07.12.2016**
(21) Anmeldenummer: 10726870.8
(22) Anmeldetag: 02.02.2010
(51) Int. Cl.: A47F 9/04

(54) **DIEBSTAHLSCHUTZ FÜR SELBSTBEDIENUNGSMÄRKTE**
THEFT PROTECTION FOR SELF-SERVICE STORES
SYSTÈME DE PROTECTION CONTRE LE VOL POUR MAGASINS EN LIBRE SERVICE

(30) Priorität: 02.02.2009 DE 202009001237 U
(43) Veröffentlichungstag der Anmeldung: 07.12.2011
(73) Patentinhaber: Wieth, Franz, 82178 Puchheim (DE); Filosi, Andreas, 82178 Puchheim (DE)
(72) Erfinder: Wieth, Franz, 82178 Puchheim (DE)
(74) Vertreter: Braun-Dullaeus, Karl-Ulrich
(86) Internationale Anmeldenummer: PCT/DE2010/000108
(87) Internationale Veröffentlichungsnummer: WO 2010/099771

(56) Entgegenhaltungen:
- EP-A2- 1 014 319

## Beschreibung

### Technisches Gebiet

Die Erfindung betrifft den Diebstahlschutz für Selbstbedienungsmärkte mit sogenannten Selfscanning Kassen, bei welchen die Kunden die gekauften waren selbst an einer automatischen Kasse vorgezeigt. Dort werden die Waren anhand des Warencodes (z.B. EAN Code als Strichcode) identifiziert und berechnet. Anschließend bezahlt der Kunde die identifizierten Waren und kann den Selbstbedienungsmarkt verlassen.

### Stand der Technik

Bei bekannten Systemen zum Diebstahlschutz werden die vom Kunden der automatischen Kasse vorgezeigten Waren gewogen und es wird eine Plausibilität zwischen dem in einer Datenbank gespeicherten Gewicht einer Ware und dem aktuell gewogenen Gewicht hergestellt.

Auf diese Weise ist erkennbar, wenn Manipulationen vorgenommen wurden, etwa wenn auf ein teures Produkt der Barcode eines billigen Produktes geklebt wurde. In solch einem Fall kann dann Alarm ausgelöst werden, der eine Kontrolle des Kunden am Ausgang zur Folge hat.

Nachteilig ist der hohe technische Aufwand, der beim Stand der Technik nötig ist, denn an jeder Self Scanning Kasse muss eine hochpräzise Wage vorhanden sein und es muss eine Verbindung zwischen der Selfscanning Kasse und dem Alarmsystem vorhanden sein.

Zudem ist auch dieses System nicht manipulationssicher, denn es gibt eine Reihe von Waren, bei denen das Gewicht gleich ist, aber der Preis deutlich unterschiedlich. Eine solche Warengruppe sind beispielsweise alkoholische Getränke mit einem normierten Inhalt in gleichen Flaschen. Die Qualitäts- und Preisunterschiede zwischen einer Flasche Sekt und einer Flasche Champagner sind mit dem bekannten System nicht anhand des Gewichtes erkennbar.

Der hohe technische Aufwand hat daher eine nachteilig lange Amortisationszeit.

Ein weiterer Nachteil der bekannten Self Scanning Kassen liegt darin, dass es möglich ist, mit dem Einkaufswagen die Self Scanning Kasse zu passieren, ohne dass irgendwelche Waren vorgezeigt werden.

EP 1014319A2 offenbart einen Diebstahlschutz für Selbsbedienungsmärkte mit Self Scanning Kassen worin ein erster Sensor vor der Selfscanning Kasse einen Einkaufswagen erfasst und ein zweiter Sensor nach der Selfscanning Kasse den Einkaufswagen erneut erfasst und beim Unterschreiten einer vorgegebenen Zeitspanne zwischen der Erfassungen durch den ersten Sensor und den zweiten Sensor ein Alarm ausgelöst wird.

### Offenbarung der Erfindung

### Technische Aufgabe

Es ist Aufgabe der Erfindung eine Vorrichtung zum Erkennen von Manipulationen an einer Self Scanning Kasse zu schaffen, welche preiswert ist und zudem erkennt, wenn eine Self Scanning Kasse passiert wird, ohne dass die Ware vorgezeigt wird.

### Technische Lösung

Diese Aufgabe wird gelöst, indem ermittelt wird, wie lange sich ein Kunde mit seinem Einkaufswagen im Bereich der Self Scanning Kassen aufgehalten hat, bevor er den Selbstbedienungsmarkt verläßt.

Die Erfindung macht sich die Erkenntnis zu eigen, dass es deutlich mehr Zeit benötigt, wenn der Kunde die Waren an der Self Scanning Kasse vorzeigt und bezahlt, als wenn der Kunde ohne zu scannen die Self Scanning Kasse passiert und zum Ausgang geht.

Beim Unterschreiten einer bestimmten Zeit zwischen dem Eintritt in den Bereich der Self Scanning Kasse und dem Passieren des Ausganges wird ein Alarm ausgelöst.

### Vorteilhafte Wirkungen

Durch die vorliegende Erfindung wird vorteilhaft eine kostengünstige Vorrichtung zum Erkennen von Diebstahl an einer Self Scanning Kasse geschaffen, die ohne eine hochpräzise Waage auskommt und welche keine Verbindung zu der Self Scanning Kasse erfordert.

Dies erlaubt es vorteilhaft, die Erfindung als jederzeit nachrüstbare Stand alone Vorrichtung zu betreiben. Aufgrund der vergleichsweise geringen Kosten ist die Amortisation in relativ kurzer Zeit möglich.

### Kurze Beschreibung der Zeichnungen

Nachfolgend wird die Erfindung anhand einer Figur erläutert.

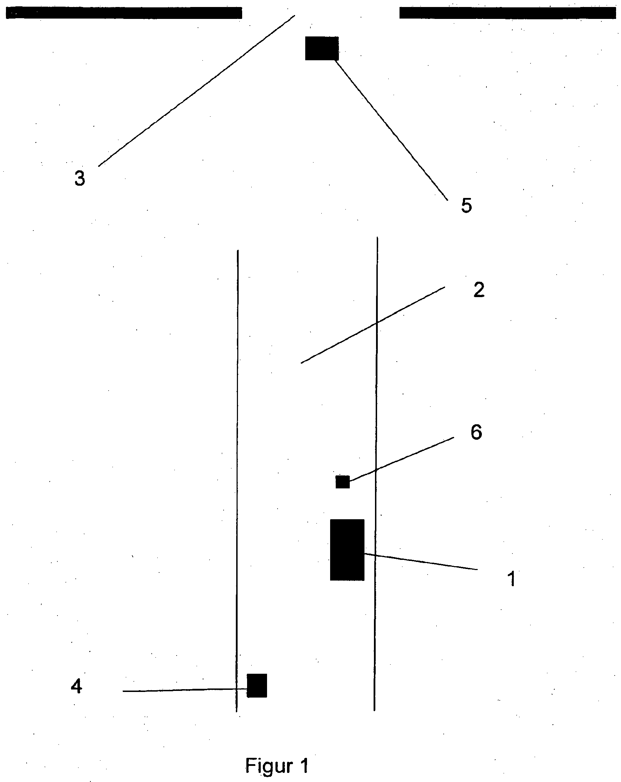

Die Figur 1 zeigt einen Lageplan eines Selbstbedienungsladens mit einer Self Scanning Kasse 1. Die Self Scanning Kasse 1 befindet sich in einem Gang 2. Im Anschluss an den Gang folgt der Ausgang 3 des Selbstbedienungsladens.

Im Anfangsbereich des Ganges 2 befindet sich ein Sensor 4, durch welchen jeder Einkaufswagen, der in den Gang 2 geschoben wird individuell erkannt wird.

Die individuelle Erkennung des Einkaufswagens erfolgt entweder indem sich am Einkaufswagen eine Markierung befindet, welche auf optischen oder elektronischem Wege erkennbar ist. Eine solche Markierung kann beispielsweise ein Barcode am Einkaufswagen sein oder ein Transponder der am EKW befestigt ist. Auch ist es möglich die Anwesenheit des Einkaufswagens indirekt über eine Kundenkarte zu erfassen, wenn die Person welche den Einkaufswagen benutzt eine solche mitführt. Am einfachsten lässt sich eine solche Kundenkarte erfassen, wenn die Kundenkarte einen Transponder beinhaltet.

Durch einen weiteren Sensor 5, der sich nach dem Gang 2 mit der Self Scanning Kasse 1 befindet erfolgt abermals eine individuelle Erkennung des Einkaufswagens auf die o.g. Art und Weise.

Anhand der Zeitspanne, die zwischen dem Erkennen beim Sensor 4 am Anfangsbereich des Ganges 2 mit der Self Scanning Kasse 1 und dem Erfassen beim Sensor 5 nach der Self Scanning Kasse 1 liegt können Rückschlüsse auf einen Diebstahlversuch gezogen werden.

Eine kurze Zeitspanne deutet darauf hin, dass der Benutzer des Einkaufswagens den Gang 2 mit der Self Scanning Kasse 1 passiert hat, ohne die Waren an der Self Scanning Kasse 1 vorzulegen und nun versucht ohne zu bezahlen den Selbstbedienungsmarkt durch den Ausgang 3 zu verlassen.

Daraufhin wird ein Alarm ausgelöst und Sicherheitspersonal kann den Wagen einer individuellen Kontrolle unterziehen.

Aus Gründen der Diskretion ist es hierbei möglich, dass ein stiller Alarm ausgelöst wird. Der stille Alarm hat den Vorteil, dass potentielle Täter, welche eine Kontrolle eines anderen Kunden mitbekommen zunächst keine Info darüber erhalten, dass eine technische Vorrichtung vorhanden ist. Ein potentieller Täter wird vielleicht annehmen, dass die Kontrollen nach einem Zufallsprinzip vorgenommen werden und wird sich daher keine Gedanken machen, eine Umgehungsstrategie zu entwickeln.

In einer Weiterbildung der Erfindung erfasst ein Sensor 6 das Nahfeld um die Self scanning Kasse 1. Dieser Sensor 6 erfasst in regelmäßigen, auf den Anwendungsfall einstellbaren Zeitabständen den Einkaufswagen oder die Kundenkarte der Person, welche den Einkaufswagen benutzt.

Im Falle eines ordnungsgemäßen Verhaltens einer Person, wird der Sensor 6 den Einkaufswagen in der Zeit, während die Waren der Self Scanning Kasse 1 vorgelegt werden den Einkaufswagen mehrmals erfassen.

Wenn der Sensor 5 nach der Self Scanning Kasse 1 einen Einkaufswagen erfasst, der nicht zuvor mehrmals vom Sensor 6 im Nahfeld um die Self Scanning Kasse 1 erkannt worden war, so ist dies ein Hinweis darauf, dass versucht wird Ware ohne Bezahlung aus dem Selbstbedienungsmarkt zu transportieren.

Durch diese Weiterbildung wird es Tätern schwerer gemacht die Vorrichtung zu täuschen, indem sie absichtlich langsam den Gang 2 mit der Self Scanning Kasse 1 passieren, um so einen Zeitraum verstreichen zu lassen, der plausibel lange erscheint.

Die Erfindung kann gewerblich bei allen Selbstbedienungsmärkten mit Self Scanning Kassen eingesetzt werden.

## Patentansprüche

1. Diebstahlschutz für Selbstbedienungsmärkte mit Self Scanning Kassen
**dadurch gekennzeichnet, dass**
ein erster Sensor (4) vor der Selfscanning Kasse (1) einen Einkaufswagen individuell erkennt und ein zweiter Sensor (5) nach der Selfscanning Kasse (1) den Einkaufswagen erneut individuell, erkennt und beim Unterschreiten einer vorgegebenen Zeitspanne zwischen dem Erkennen durch den ersten Sensor (4) und dem zweiten Sensor (5) ein Alarm ausgelöst wird.

2. Diebstahlschutz für Selbstbedienungsmärkte mit Self Scanning Kassen,
**dadurch gekennzeichnet, dass**
ein Sensor (6) das Nahfeld um die Self Scanning Kasse (1) in regelmäßigen Zeitabständen das Vorhandensein von den Einkaufswagen erfasst und den Einkaufswagen erkennt, und ein zweiter Sensor (5) nach der Selfscanning Kasse (1) den Einkaufswagen erneut individuell erfasst und erkennt, und beim Erkennen eines Einkaufswagens, der durch den Sensor (6) im Nahfeld um die SelfScanning Kasse (1) nicht oder nur während eines nicht ausreichend langen Zeitraums erfasst worden war, ein Alarm ausgelöst wird..

3. Diebstahlschutz nach Anspruch 1 oder 2,
**dadurch gekennzeichnet, dass**
der Einkaufswagen eine Markierung aufweist, die auf optischen oder elektronischen Wege erkennbar ist.

4. Diebstahlschutz nach Anspruch 3,
**dadurch gekennzeichnet, dass**
die Markierung ein Barcode oder ein Transponder ist.

5. Diebstahlschutz nach Anspruch 1 oder 2,
**dadurch gekennzeichnet, dass**
der eine Kundenkarte einen Transponder aufweist, so dass der Einkaufswagen indirekt über die Kundenkarte erkennbar ist.

6. Diebstahlschutz nach einem der vorherigen Ansprüche,
**dadurch gekennzeichnet, dass**
der ausgelöste Alarm ein stiller Alarm ist.

## Claims

1. A theft protection device for self-service markets having self-scanning cash registers,
**characterized in that** a first sensor (4) before the self-scanning cash register (1) individually recognizes a shopping cart and a second sensor (5) after the self-scanning cash register (1) again individually recognizes the shopping cart and, if a predefined time span is undershot between the recognition by the first sensor (4) and the second sensor (5), an alarm is triggered.

2. A theft protection device for self-service markets having self-scanning cash registers,
**characterized in that** a sensor (6) detects the presence of the shopping cart in the near field around the self-scanning cash register (1) at regular intervals and recognizes the shopping cart, and a second sensor (5) after the self-scanning cash register (1) again individually detects and recognizes the shopping cart and, if a shopping cart is recognized which was not detected or was not detected for a sufficiently long period of time by the sensor (6) in the near field of the self-scanning cash register (1), an alarm is triggered.

3. The theft protection device according to Claim 1 or 2,
**characterized in that** the shopping cart has a marking which is recognizable in an optical or electronic manner.

4. The theft protection device according to Claim 3,
**characterized in that** the marking is a barcode or a transponder.

5. The theft protection device according to Claim 1 or 2,
**characterized in that** a customer card has a transponder, so that the shopping cart is recognizable indirectly via the customer card.

6. The theft protection device according to any one of the preceding claims,
**characterized in that** the triggered alarm is a silent alarm.

## Revendications

1. Protection antivol pour des marchés en libre-service équipés de caisses en « self scanning » (enregistrement du code-barres par le client), **caractérisée en ce qu**'un premier capteur (4) identifie individuellement un chariot de courses avant la caisse en self scanning (1) et un second capteur (5) identifie individuellement à nouveau le chariot de course après la caisse en self scanning (1) et déclenche une alarme en cas de sous-dépassement d'un intervalle prédéfini entre la détection par le premier capteur (4) et par le second capteur (5).

2. Protection antivol pour des marchés en libre-service équipés de caisses en self scanning, **caractérisée en ce qu**'un capteur (6) détecte le champ proche autour de la caisse en self scanning (1) à intervalles temporels réguliers ainsi que la présence des chariots de courses et identifie les chariots de courses, et un second capteur (5) détecte et identifie à nouveau individuellement le chariot de courses après la caisse en self scanning (1) et une alarme se déclenche en cas de détection d'un chariot de courses qui n'a pas été détecté ou qui a été détecté uniquement durant un intervalle d'une durée insuffisante par le capteur (6) dans le champ proche autour de la caisse en self scanning (1).

3. Protection antivol selon la revendication 1 ou 2, **caractérisée en ce que** le chariot de courses présente un marquage identifiable par des moyens optiques ou électroniques.

4. Protection antivol selon la revendication 3, **caractérisée en ce que** le marquage est un code-barres ou un transpondeur.

5. Protection antivol selon la revendication 1 ou 2, **caractérisée en ce que** l'une carte client présente un transpondeur, de sorte que le chariot de courses est indirectement identifiable par l'intermédiaire de la carte client.

6. Protection antivol selon l'une des revendications précédentes, **caractérisée en ce que** l'alarme déclenchée est une alarme silencieuse.
